# EUROPEAN PATENT SPECIFICATION

(11) **EP 4 167 539 B1**
(45) Date of publication and mention of the grant of the patent: **21.05.2025**
(21) Application number: 21826298.8
(22) Date of filing: 15.06.2021
(51) Int. Cl.: H04L 67/1087, H04L 67/1001, H04L 67/60, G06F 9/50, G06F 9/48

(54) **RESOURCE MANAGEMENT**
RESSOURCENVERWALTUNG
GESTION DE RESSOURCES

(30) Priority: 16.06.2020 CN 202010549774
(43) Date of publication of application: 19.04.2023
(73) Proprietor: ZTE Corporation, Shenzhen, Guangdong 518057 (CN)
(72) Inventor: PU, Jiange, Shenzhen, Guangdong 518057 (CN); XU, Daigang, Shenzhen, Guangdong 518057 (CN); HU, Rui, Shenzhen, Guangdong 518057 (CN); ZHANG, Jin, Shenzhen, Guangdong 518057 (CN)
(74) Representative: Deambrogi, Edgardo
(86) International application number: PCT/CN2021/100121
(87) International publication number: WO 2021/254331

(56) References cited:
- EP-A1- 3 637 733
- CN-A- 101 621 413
- CN-A- 102 377 598
- CN-A- 110 413 346
- CN-A- 111 142 971
- US-A1- 2019 213 326

## Description

### Technical Field

The present disclosure relates to the field of communications technologies.

### Background

Load balancing refers to balancing or distributing loads (work tasks) to a plurality of operation units for running, for example, distributing the loads to a File Transfer Protocol (FTP) server, a Web Server, an enterprise core application server and other main task servers, so as to achieve the work tasks cooperatively. In a micro server system, each micro server may initiate a request to other micro servers, and in a scenario with a plurality of requesters, a micro server of each requester respectively acquires local resource information thereabout, and independently performs load balancing based on the local resource information thereabout. In this way, load imbalance may occur, and therefore, a micro server serving as a requester implements a load balance mechanism. As a result, the global load is not balanced enough, and the accuracy of load balancing is reduced.

D1, EP 3 637 733 (HUAWEl TECH CO LTD [CN]) 15 April 2020, discloses a service environment with client and servers where server chaining may also happen, in this case a server is both a client and server (micro services). Computing nodes report their load to a "global" load balancing engine. This load balancing engine then 1) sends a load balancing policy to one client, and, 2) sends load balancing policy to the (other) computing nodes.

### Summary

The invention is defined by the independent claims. Dependent claims define preferred embodiments.

In the embodiments of the present disclosure, when there is resource update information about a micro server, the resource update information can be reported to a load information manager by a proxy server of the micro server, then, the resource update information can be broadcast to a proxy server corresponding to each micro server by the load information manager, so that each proxy server can acquire global resource information about each micro server. In this case, a locally pre-stored resource usage state of each micro server can be updated based on resource update information by a proxy server corresponding to each micro server, so that each proxy server can maintain the resource usage state of each micro server timely and accurately. A load balancing operation is executed based on a resource usage state, thereby realizing global load balancing based on global resource information. Thus, the accuracy of implementing load balancing is improved, and the reliability and accuracy of resource management are improved.

### Brief Description of the Drawings

Fig. 1 is a schematic structural diagram of a resource management system according to an embodiment of the present disclosure;
Fig. 2 is a schematic flowchart of a resource management method according to an embodiment of the present disclosure;
Fig. 3 is a schematic flowchart (1) of a resource management method according to another embodiment of the present disclosure;
Fig. 4 is a schematic flowchart (2) of a resource management method according to another embodiment of the present disclosure;
Fig. 5 is a schematic flowchart (3) of a resource management method according to another embodiment of the present disclosure;
Fig. 6 is a schematic flowchart (4) of a resource management method according to another embodiment of the present disclosure;
Fig. 7 is a schematic structural diagram of a proxy server according to an embodiment of the present disclosure.

### Detailed Description of the Embodiments

The following clearly and completely describes the technical solutions in the embodiments of the present disclosure with reference to the accompanying drawings in the embodiments of the present disclosure.

The flow charts shown in the figures are merely illustrative, do not necessarily include all of the content and operations/steps, nor do they necessarily have to be performed in the order described. For example, some operations/steps may be broken down, combined, or partially combined, and thus the order of actual execution may vary as desired.

Some embodiments of the present disclosure will be described in detail below with reference to the accompanying drawings. Without conflict, the following embodiments and features in the embodiments may be combined with each other.

Embodiments of the present disclosure provide a resource management method and system, a proxy server, and a storage medium.

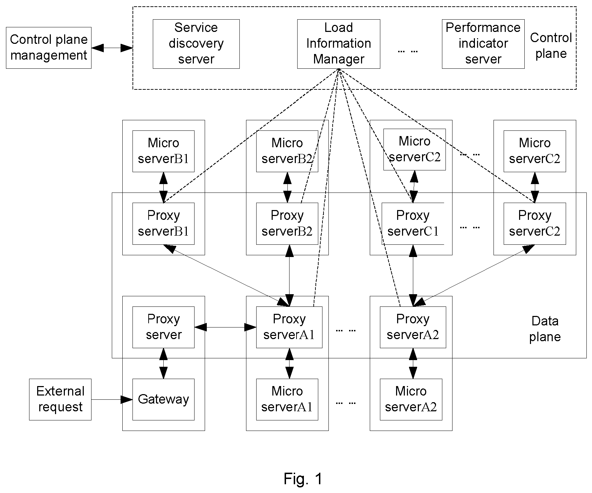

Please refer to Fig. 1, Fig. 1 is a schematic structural diagram of a resource management system according to an embodiment of the present disclosure. As shown in Fig. 1, the resource management system may include a plurality of micro servers, a plurality of proxy servers corresponding to respective micro servers, and a load information manager, wherein each micro server is connected to a proxy server corresponding thereto, and each proxy server is connected to a load information manager. For example, a proxy server of each micro server may send a registration request to the load information manager. After receiving the registration request, the load information manager returns a registration response to each proxy server, establishing a connection relationship between a load information manager and a proxy server of each micro server based on a registration response. Types of the micro server, the proxy server, and the load information manager may be flexibly set according to actual requirements, and a specific type is not limited herein.

The load information manager can be used for: 1) receiving resource usage conditions (namely, resource usage states) of instances of a plurality of micro servers reported by a plurality of proxy servers in the resource management system, such as the number of connections and the number of requests, and storing resource occupancy conditions of instances of all the micro servers in the resource management system; 2) after receiving the reported resource usage update event, broadcasting same to all the proxy servers in the resource management system.

All the proxy servers can be used for: 1) registering with a load information manager, and monitoring a notification of a change in a resource occupation condition (namely, a resource usage update) of each micro server in a resource management system; 2) after receiving a notification of a resource occupation condition change, saving a new resource occupation condition in a local memory.

The proxy server acting as the proxy server of receiver may be configured to 1) after receiving the request, before a request is forwarded to a micro server (also referred to as a local server) connected thereto, a current resource occupation condition of an instance of the micro server is reported to a load information manager, and then forwards the request to the instance of the micro server, or reports the current resource occupation condition of the instance of the micro server to the load information manager, simultaneously forwarding requests to the instances of the micro server; 2) after the local server finishes processing the request and returns a response, the proxy server of the receiver reporting a current resource occupation condition to the load information manager, and then returning a response to the requester; 3) in addition to the starting and ending time of request processing, in the service processing process, the local server may also call an interface of the proxy server to update a resource occupation condition of the local server, and the proxy server locally stores the latest resource occupation condition and reports same to the load information manager.

The proxy server acting as a proxy server of requester may be configured such that after the requester's micro server sends a request, the representative server of the requester receives the request, acquiring resource occupation conditions of all the requested instances of the micro server from a local memory, and combining a load balancing policy, selecting an instance of a server of the receiver, and then forwarding the request to the instance of the server of the receiver, global load balancing is achieved including instances of the gateway and all of the micro servers.

The resource occupancy may comprise: 1) resource consumption that can be acquired by the proxy server, for example, the current number of connections, and such information can be automatically acquired and reported by the proxy server; 2) a proxy server cannot obtain, for example, only a micro server can estimate the resource consumption of a certain type of query, and this type needs to be sent to the proxy server by the micro server, and then reported by the proxy server.

It should be noted that after a single application evolves into a resource management system (referred to as a micro service system), an invocation within a process becomes a remote invocation between processes, and management and monitoring of a large number of network connections and requests become a difficult problem in resource management system development. In order to relieve the micro server from a complex network problem (including load balancing), attention is focused on service development, and a service grid is introduced into a resource management system to undertake a management and control task of network communication of the micro server.

As shown in Fig. 1, a service grid may be logically divided into a data plane and a control plane, where the data plane is formed by a group of intelligent proxys in a network, and these proxys (namely, proxy servers) are deployed together with an instance of each micro server. The proxy servers intercept network requests sent and received by the micro servers, and therefore these proxy servers can take over network communications between the micro servers, and are responsible for tasks such as micro server forwarding, load balancing, and performance index reporting of instances of the micro server. A control plane is responsible for managing and configuring a proxy server, and is responsible for issuing a load balancing policy of a micro server, a fusion current limiting rule, and a collected performance indicator, etc. to the proxy server. Because the proxy server is an enhancement to a micro server, which is similar to a relationship between a motorcycle and a bucket, the proxy server in the service grid may also be referred to as a sidecar.

After the resource management system is introduced into the service grid, each instance of the micro server is deployed together with one proxy server (for example, both the instance of the micro server and the proxy server are deployed in the same pod of k8s). All requests sent by the micro server (namely, network requests) are forwarded by the proxy server. Load balancing in a resource management system is implemented by a proxy server, which may specifically be as follows: the proxy server obtains information of instances of all micro servers through a server discovery component of a control plane; when a certain micro server initiates a request, a proxy server deployed locally on the micro server may select an instance of the micro server of the receiver according to a load balancing policy, and send the request to the instance.

Specifically, in order to achieve the purpose of distributing requests to instances of a plurality of micro servers as evenly as possible in a resource management system, a proxy server is provided for each instance of a micro server in the resource management system, a plurality of micro servers do not directly communicate with each other, and a plurality of micro servers communicate with each other by a proxy server, and all the proxy servers constitute a service grid data plane. The control plane of the service grid includes components for managing the data plane, such as a component of secure network communication and a component of performance index collection. A global load information manager is newly added in the control plane, and the global load balancing service is responsible for storing and broadcasting resource usage conditions of all the micro servers, such as the number of connections, CPU, and memory occupation. All the proxy servers report the resource usage condition of the instance of the micro server on which all the proxy servers are proxy to the load information manager, and all the proxy servers may also obtain the resource usage condition of the instance of other micro servers from the load information manager, so as to achieve global load balancing based on the resource usage condition of the instance of each micro server. A global load information manager is introduced into a resource management system and is responsible for storing and broadcasting resource usage states of instances of all micro servers; a proxy server can report and share resource usage states of instances of all micro servers; and a micro server serving as a receiver can also update its own resource usage state by the proxy server. In this way, all the requesters can acquire resource load conditions of all the instances of the global micro server, load balancing can be implemented more accurately, and the purpose of evenly allocating resources of the entire system is achieved.

In a resource management system composed of a plurality of micro servers, each micro server undertakes a respective service, each micro server is an independent process, and access is performed among the plurality of micro servers by means of remote invoking. For example, in a network management system, there are micro servers such as topology, alarms, and resources, and the topology and alarms may invoke a resource server interface to query information of a resource object.

In a resource management system (which may also be referred to as a micro service system), load balancing not only occurs at a gateway, but also occurs among a plurality of micro servers. For example, there are three instances of the resource server, and when an alarm invokes a resource server interface, an instance of a certain micro server needs to be selected through a load balancing algorithm. For a single application, all externally initiated requests pass through the gateway, and therefore, a simple load balancing policy may basically achieve an objective of evenly distributing loads on a plurality of service instances by the externally initiated requests. However, in a resource management system, load balancing may occur in a plurality of places, for example, in a network management system, a topology and an alarm will both send a request to a resource server, and there may also be a plurality of instances of the topology and the alarm per se. Because requests have a plurality of sources, if load balancing is independently performed at the plurality of sources, the purpose of evenly distributing loads cannot be well achieved. Therefore, in the embodiments of the present disclosure, global resource information collection can be performed on all the instances of the micro server in the resource management system, which serves as a basis of a load balancing policy, so that the optimal selection of the instances of the micro server can be realized, and the purpose of global average allocation can be realized; and a plurality of requesters share request information, and the effect of extremely unbalanced loads of a plurality of instances of a receiver can be avoided.

For example, assuming that a polling load balancing policy is adopted, there are two instances of an alarm and a resource, and after a period of time, the following conditions occur: alarm instance 1 has five requests being processed, resource instance 1 has two resource instances 1 and resource instance 2 has three resource instances 2; in alarm instance 2, there are six requests being processed, there are five resource instances 1, and there are one resource instances 2; if the alarm instance needs to send a new request, in the existing local load balancing, it is considered that the new request should be sent to the resource instance 1 according to the data recorded by the alarm instance itself. However, in the embodiment of the present disclosure, sending to the resource instance 2 can be determined according to the resource information of the instance of the global micro server. It can be seen from this example that, when a plurality of requesters do not share request information, extreme imbalance of load of a receiver may be caused. The embodiments of the present disclosure solve this problem, i.e. based on global resource information of instances of all micro servers serving as a basis of a load balancing policy, optimal selection of the instances of the micro servers can be realized. The embodiments of the present disclosure can achieve the effect of load balancing even in a special case in which there are many requester instances and few receiver instances, or in a case in which the consumption of resources of a request for a receiver is very large.

For example, a micro server provides an interface, and may query data of a certain type, for example, information of all network elements belonging to a certain region. Based on the resource management method of the embodiments of the present disclosure, the requester can correctly estimate the resource consumption of the receiver: the number of network elements in a plurality of regions differs greatly, and also queries a region, so that the resource consumption differs greatly. Load balancing may introduce a weight. A requester can accurately estimate resource consumption. After receiving a request, a receiver can check firstly the total number of resources in a region, and then estimate the amount of resources required to be consumed for collecting all resource data. For another example, the resource consumption of the receiver is not a fixed value: when the information is queried, the resource consumption may be large at the beginning. However, in the subsequent processing, the consumed resources are greatly reduced, and in this case, although the request is not processed completely, a large amount of resources have been released. In this case, the proxy server of the requester may obtain the resource usage condition of the micro server of the receiver from the load balancer, and can better evenly distribute requests

In a scene in which there are a plurality of requesters, if each requester performs load balancing independently, a result that global load is greatly unbalanced may occur because information obtained by each requester is only partial. By introducing a load information manager, all the proxy servers can report and share resource occupation conditions of instances of all the micro servers, and share global information; and a requester can obtain real resource occupation conditions of the instances of all the micro servers, so that all the requesters can perform load balancing more accurately, thereby achieving the purpose of evenly distributing resources of the entire system, and achieving global load balancing.

In the embodiments of the present disclosure, when resource update information exists in a micro server, the resource update information can be reported to a load information manager by a proxy server of the micro server. Then the resource update information can be broadcast to a proxy server corresponding to each micro server by the load information manager, so that each proxy server can acquire global resource information about each micro server. In this case, a locally pre-stored resource usage state of each micro server can be updated based on resource update information by means of a proxy server corresponding to each micro server. In this way, each proxy server can maintain the resource usage status of each micro server timely and accurately. For example, initiating a request by means of a micro server of the requester, and acquiring resource occupation information about the request; reporting resource occupation information to a load information manager by a proxy server of a requester; broadcasting, by a load information manager, resource occupation information to a proxy server corresponding to each micro server; updating a locally pre-stored resource usage state of each micro server based on resource occupation information by means of a proxy server corresponding to each micro server. For another example, after the micro server of the receiver completes the processing of the request initiated by the requester, the micro server acquires the requested resource release information through the proxy server of the receiver, and reports the resource release information to the load information manager; broadcasting, by a load information manager, resource release information to a plurality of proxy servers corresponding to respective micro servers; updating a locally pre-stored resource usage state of each micro server based on resource release information by means of a proxy server corresponding to each micro server. In this case, the proxy server may execute a load balancing operation based on a resource usage state. For example, determining, by means of a proxy server of the requester, a micro server of a receiver corresponding to a request based on a locally pre-stored resource usage state of each micro server and a pre-set load balancing policy; sending, by the proxy server of the requester, the request to the proxy server of the receiver, and forwarding, by the proxy server of the receiver, the request to the micro server of the receiver. Thus, global load balancing is implemented on the basis of the global resource information, the accuracy of implementing load balancing is improved, and the reliability and accuracy of resource management are improved.

In the foregoing embodiments, descriptions of the embodiments are focused on each other. For a part that is not described in detail in a certain embodiment, reference may be made to the following detailed description of a resource management method, and details are not repeatedly described herein.

It should be noted that the structure of the resource management system in Fig. 1 does not limit the application scenes of the resource management method, and the resource management method is described in detail in the following.

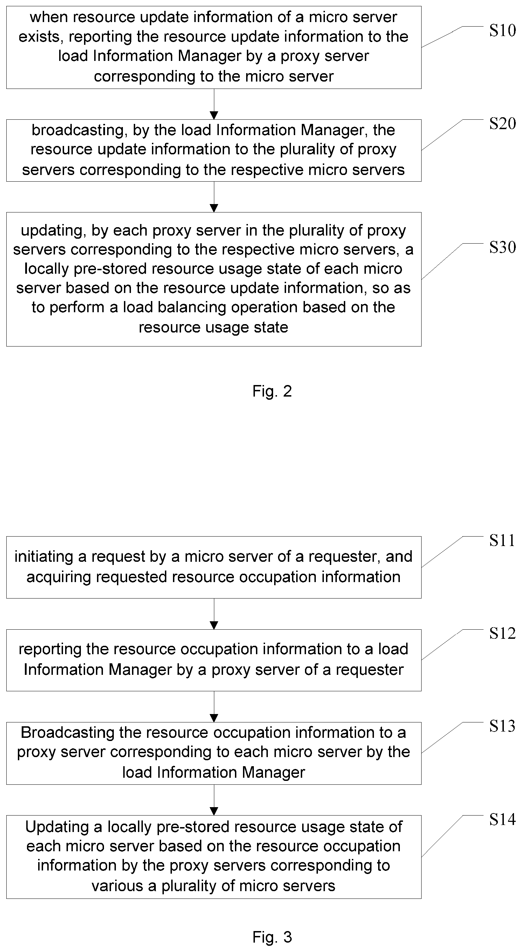

Please refer to Fig. 2, Fig. 2 is a schematic flowchart of a resource management method according to an embodiment of the present disclosure. The resource management method may be applied to a resource management system. The resource management method may include but is not limited to steps S10 to S30, and may be specifically as follows:
S10, when resource update information of a micro server exists, reporting the resource update information to the load information manager by a proxy server corresponding to the micro server.
   The resource update information may comprise resource occupation information and resource release information, etc., and the resource occupation information may comprise information such as occupying a memory resource and occupying a CPU resource. The resource release information may comprise information such as releasing a memory resource and releasing a CPU resource, for example, resource occupation information may be reported to a load information manager by a proxy server of a micro server. Alternatively, the resource release information may be reported to the load information manager through a proxy server of the micro server.
S20, broadcasting, by the load information manager, the resource update information to the plurality of proxy servers corresponding to the respective micro servers.
   After receiving the resource update information, the load information manager may broadcast the resource update information to a proxy server corresponding to each micro server.
S30, updating, by each proxy server in the plurality of proxy servers corresponding to the respective micro servers, a locally pre-stored resource usage state of each micro server based on the resource update information, so as to perform a load balancing operation based on the resource usage state.

Each proxy server maintains a resource usage state of each micro server in a resource management system. After receiving resource update information broadcast by a load information manager, each proxy server can update a resource usage state of each micro server in a locally pre-stored resource management system based on the resource update information. Subsequently, each proxy server may perform a load balancing operation based on the resource usage state.

It should be noted that, when the resource update information of the micro server exists, the proxy server corresponding to the micro server may update the resource usage status of each micro server in the locally pre-stored resource management system, and reporting the resource update information to a load information manager by a proxy server of the micro server. In this case, the load information manager may broadcast the resource update information to other proxy servers in the resource management system, so that the other proxy servers update the resource usage state of each micro server in the locally pre-stored resource management system based on the resource update information. The other proxy servers are all the other proxy servers except the one reporting the resource update information in the resource management system. Alternatively, when the resource update information of the micro server exists, the resource update information may be reported to the load information manager through a proxy server of the micro server. In this case, the load information manager may broadcast the resource update information to all the proxy servers (including the proxy servers reporting the resource update information) in the resource management system. In this way, all proxy servers update the resource usage status of each micro server in the locally pre-stored resource management system based on the resource update information.

In an embodiment, the resource management method can further comprise: configuring a corresponding proxy server for each micro server in the resource management system, and configuring a load information manager; sending a registration request to a load information manager through a proxy server of each micro server; establishing a connection relationship between a load information manager and a proxy server of each micro server according to a registration request.

In order to improve the reliability of data interaction and the accuracy of load balancing, in a resource management system, a corresponding proxy server is configured for each micro server, a load information manager is configured, and then a registration request is sent to the load information manager by a proxy server of each micro server. Each proxy server may receive a registration response returned by the load information manager, and establish a connection relationship between the load information manager and a proxy server of each micro server based on the registration response. In this way, data interaction may be performed between the load information manager and the proxy server.

Referring to Fig. 3, in an embodiment, when there is a resource update of a micro server, resource update information is reported to a load information manager by a proxy server of the micro server, the resource update information is broadcast to a proxy server corresponding to each micro server by a load information manager, updating a locally pre-stored resource usage state of each micro server by a proxy server corresponding to each micro server based on the resource update information. The method may include, but is not limited to, step S11 and step S14, and may specifically be as follows:
Step S11, initiating a request by a micro server of a requester, and acquiring requested resource occupation information;
Step S12, reporting the resource occupation information to a load information manager by a proxy server of a requester;
Step S13, broadcasting the resource occupation information to a proxy server corresponding to each micro server by the load information manager;
Step S14, updating a locally pre-stored resource usage state of each micro server based on the resource occupation information by means of the proxy servers corresponding to a plurality of micro servers.

In order to improve the timeliness and convenience of updating the resource usage state, the resource usage state can be updated when the request is initiated. Specifically, in a resource management system, any one of the micro servers may serve as a micro server of a requester or a micro server of a receiver. The micro server of the requester may initiate a request and acquire requested resource occupation information, for example, information such as the amount of occupied resources A and the amount of occupied resources B of the request. Then, the proxy server of the requester can report the resource occupation information to the load information manager, and after receiving the resource occupation information, the load information manager can update the resource usage state of each micro server in the locally pre stored resource management system according to the resource occupation information, and broadcast the resource occupation information to the plurality of proxy servers corresponding to the respective micro servers. In this case, the plurality of proxy servers corresponding to the respective micro servers can update the resource usage state of each micro server in the locally pre-stored resource management system based on the received resource occupation information, for example, the locally pre-stored resource occupancy condition of example 1 of the micro server A can be updated based on the resource occupation information of example 1 of the micro server A.

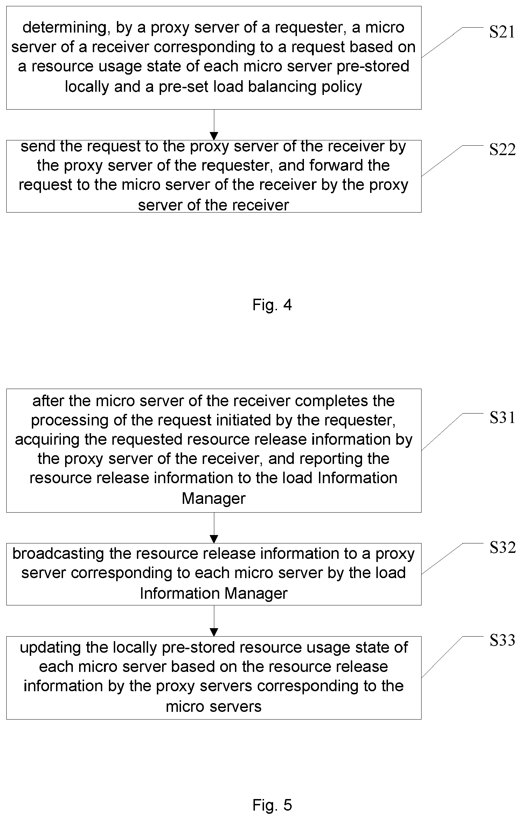

Referring to Fig. 4, in an embodiment, the performing the load balance operation based on the resource usage state may include but is not limited to steps S21 and S22, and the details may be as follows:
Step S21, determining, by means of a proxy server of a requester, a micro server of a receiver corresponding to a request based on a resource usage state of each micro server pre-stored locally and a pre-set load balancing policy;
Step S22, send the request to the proxy server of the receiver through the proxy server of the requester, and forward the request to the micro server of the receiver by the proxy server of the receiver.

The load balancing strategy can be flexibly set according to actual needs, for example, the load balancing strategy can comprise weight polling, random, the priority of the smallest number of connections, and the priority of the response speed, etc., and the purpose of the load balancing is to distribute load balancing to instances of a plurality of micro servers as far as possible. For example, the smallest number of connections has a priority, and is based on an assumption that micro server resources consumed by each connection are basically the same. Therefore, the number of connections can be used to estimate resources occupied by the micro server. Because the micro server having the smallest number of connections has the largest number of available resources remaining, a request can be preferentially distributed to the micro server having the smallest number of connections, thereby realizing the purpose of even distribution.

In order to improve the accuracy and flexibility of request distribution, a request can be distributed based on a load balancing policy, for example, a proxy server of a requester can determine, based on a locally pre-stored resource usage state of each micro server in a resource management system and a pre set load balancing policy, a micro server of a receiver corresponding to the request. Then, the proxy server of the requester may send the request to the proxy server of the receiver, and at this time, the proxy server of the receiver may forward the request to the micro server of the receiver.

In one embodiment, the load balance strategy takes the priority of the smallest connection number, and the resource usage state of each micro server pre-stored locally is based on the proxy server of the requester, and a pre set load balancing policy, and determining a micro server of a receiver corresponding to a request comprises: based on a locally pre-stored resource usage state of an instance of each micro server and a load balancing policy of which the smallest connection number has priority, determining, by means of a proxy server of a requester, a micro server of a receiver corresponding to the request, setting the instance of the micro server corresponding to the smallest connection number in the plurality of micro servers as the instance of the micro server of the receiver corresponding to the request. Forwarding the request to the micro server of the receiver by the proxy server of the receiver includes forwarding the request to an instance of the micro server of the receiver by the proxy server of the receiver.

In order to improve the accuracy and convenience of the load balancing, the request can be distributed based on a load balancing policy with the highest priority on the smallest number of connections. Specifically, after the micro server of the requester initiates the request, the proxy server of the requester may be based on a locally pre-stored resource usage state of each micro server instance and a load balancing policy of which the smallest connection number has the first priority, screening out, from a plurality of micro servers, an instance of a micro server corresponding to the smallest connection number, and setting the instance of the micro server corresponding to the smallest connection number as an instance of a micro server requesting a corresponding receiver. Then, the proxy server of the requester may send the request to the instance of the micro server of the receiver, at this time, the request is received by the proxy server of the receiver, and the proxy server of the receiver may forward the request to the instance of the micro server of the receiver.

For example, the micro server of the requester sets the load balance strategy as the smallest connection number first, and the micro server of the requester sends a request 1 to the proxy server of the receiver by the proxy server of the requester. After receiving the request 1, the proxy server of the receiver reports the number of connections +1 of this instance to the load balance server. Then, the request 1 is sent to the local service instance (namely, the instance of the micro server of the receiver). After receiving the information of the number of connections +1 reported, the load information manager updates the number of connections of the instance of the micro server at the receiving side, and then broadcasts the number to all the proxy servers in the resource management system. All the proxy servers (except the proxy server reporting information) update the connection number of the micro server of the receiver in this example. Then, the proxy server initiating a new request can find resource occupation information about all the instances of all the micro servers in the local memory, find an instance with the least number of connections from the resource occupation information about all the instances of all the micro servers, and send the request to the instance with the least number of connections. After receiving the response of the request 1, the proxy server of the receiver subtracting 1 from the number of connections of the present instance, closing the connections, and reports the connection to the load balance server.

After receiving the information of reporting connection number -1, the load information manager updates the connection number of the instance of the proxy server of the receiver, and then broadcasts the information to all the proxy servers, and all the proxy servers (except the proxy server reporting the information) update the connection number of the instance.

In an embodiment, the load balancing policy is that response speed takes precedence, and a proxy server of the requester is based on a resource usage state of each micro server pre-stored locally, and a pre set load balancing policy, wherein determining a micro server of a receiver corresponding to a request comprises: based on a locally pre-stored resource usage state of an instance of each micro server and a load balancing policy with a preferential response speed, determining, by means of a proxy server of a requester, a micro server of a receiver corresponding to the request, setting the instance of the micro server corresponding to the fastest response speed in the plurality of micro servers as the instance of the micro server of the receiver corresponding to the request. Forwarding the request to the micro-server of the receiver by the proxy server of the receiver includes forwarding the request to an instance of the micro server of the receiver by the proxy server of the receiver.

In order to improve the accuracy and flexibility of load balancing, requests can be distributed based on a load balancing policy with a preferential response speed. Specifically, after a micro server of a requester initiates a request, a proxy server of the requester may be based on a locally pre-stored resource usage state of an instance of each micro server in a resource management system and a load balancing policy with a preferential response speed, screening out an instance of a micro server corresponding to the fastest response speed from a plurality of micro servers, and screening out an instance of a micro server corresponding to the fastest response speed from a plurality of micro servers, an instance of a micro server arranged to request a corresponding receiver. Then, the proxy server of the requester may send the request to the instance of the micro server of the receiver, at this time, the request is received by the proxy server of the receiver, and the proxy server of the receiver forwards the request to the instance of the micro server of the receiver.

For example, some micro servers require a period of preheating to process a large number of requests. When a fixed weight is used, if a large number of requests are sent to a newly started service instance, a node overload condition may occur, and therefore, distribution of the requests may be dynamically adjusted. The micro server of the requester sets the load balance strategy as priority according to the response speed. When the micro server A is started, the micro server A can only process 10 requests per second, and can process 200 requests per second after being sufficiently pre-heated. Therefore, the default weight of the instance of the micro server A is configured to be 10, and after being sufficiently pre-heated, the permission is 1K. When the instance of the micro server A is started, the proxy server initiating the request allocates a request to the instance according to the weight 10, and after preheating for a period of time, the micro server A can process a 200/s request, and at this time, the weight 200 of the instance of the micro server A can be updated and reported to the load information manager. After receiving the reported information, the load information manager updates the weight of the instance, and then broadcasts the updated weight to all the proxy servers. All the proxy servers (except the one reporting information) update the weight of this example of the micro server A, the larger the weight is, the faster the response speed is, and the smaller the weight is, the slower the response speed is. The proxy server initiating a new request finds the weights of all the instances of the micro server in the local memory, and allocates requests to all the micro server instances according to the weights. For example, if there is one newly started instance and two instances that are sufficiently pre-heated, the proportion of the number of requests that are allocated may be 1:20:20 in the same time.

In one embodiment, the load balance strategy is weight polling, and the resource usage state of each micro server pre-stored locally is based on the proxy server of the requester, and a pre-set load balancing policy, wherein determining a micro server of a receiver corresponding to a request comprises: polling, by means of a proxy server of a requester, a load balancing policy based on a locally pre-stored resource usage state of an instance of each micro server and a weight, setting an instance of a micro server corresponding to a smallest weight among a plurality of micro servers as an instance of a micro server requesting a corresponding receiver; the weight is a weight of a resource consumed for processing the request. Forwarding the request to the micro server of the receiver by the proxy server of the receiver includes forwarding the request to an instance of the micro server of the receiver by the proxy server of the receiver.

In order to improve the accuracy and reliability of load balancing, requests may be distributed based on a load balancing policy of weighted polling. Specifically, after the micro server of the requester initiates the request, the proxy server of the requester may be based on a locally pre-stored resource usage state of each micro server instance and a weighted polling load balancing policy, screening, from a plurality of micro servers, an instance of a micro server corresponding to the smallest weight; and screening, from the plurality of micro servers, an instance of a micro server corresponding to the smallest weight, the weight is a weight of a resource consumed for processing a request. Then, the proxy server of the requester may send the request to the instance of the micro server of the receiver, at this time, the request is received by the proxy server of the receiver, and the proxy server of the receiver may forward the request to the instance of the micro server of the receiver.

For example, the micro server of the requester sets the load balance strategy as polling according to the weight, and the micro server of the requester sets the weight value of the processing resource occupation consumption of each type of request, for example, the smallest weight value is 1, 2, 4, etc., in turn. After receiving the request, the proxy server of the receiver calculates the weight value, adds the total weight of this instance, reports the added total weight to the load information manager, and then sends the request to the local service example. After receiving the information of reporting the total weight, the load balance server updates the weight of the instance of the micro server of the receiver, and then broadcasts it to all the proxy servers in the resource management system. All the proxy servers (except the proxy server that reports the information) update the weight of the micro server of the receiver in this example. Then, the proxy server initiating a new request can find resource occupation information about all the instances of all the micro servers in the local memory, find an instance with the lowest weight from the resource occupation information about all the instances of all the micro servers, and send the request to this instance. After receiving the response to the request, the proxy server of the receiver subtracts the weight corresponding to the request and reports it to the load balance server. After receiving the reported information, the load information manager updates the weight of the instance, and then broadcasts the updated weight to all the proxy servers, and all the proxy servers (except the one reporting the information) update the weight of the instance.

Referring to Fig. 5, in an embodiment, when there is a resource update of a micro server, resource update information is reported to a load information manager by a proxy server of the micro server, the resource update information is broadcast to a proxy server corresponding to each micro server by a load information manager, updating a locally pre-stored resource usage state of each micro server by a proxy server corresponding to each micro server based on the resource update information. The method may include, but is not limited to, Step 31 to Step S33, and may specifically be as follows:
Step S31, after the micro server of the receiver completes the processing of the request initiated by the requester, acquiring the requested resource release information by the proxy server of the receiver, and reporting the resource release information to the load information manager;
Step S32, broadcasting the resource release information to a proxy server corresponding to each micro server by the load information manager;
Step S33, updating the locally pre-stored resource usage state of each micro server based on the resource release information by the proxy servers corresponding to the micro servers.

In order to improve the timeliness and accuracy of the resource usage state update, the resource usage state can be updated after the processing of the request is completed. Specifically, in a resource management system, any one micro server may serve as a micro server of a requester or a micro server of a receiver. The micro server of the receiver may receive the request initiated by the requester and process the request. After the micro server of the receiver completes processing on the request initiated by the requester, the proxy server of the receiver may acquire the resource release information of the request that has been processed. For example, information such as the amount of the resources A requested to be released and the amount of the resources B requested to be released is reported to the load information manager. After receiving the resource release information, the load information manager can update a resource usage state of each micro server in a locally pre-stored resource management system according to the resource release information, and broadcast the resource release information to a proxy server corresponding to each micro server. In this case, the plurality of proxy servers corresponding to the respective micro servers may update the resource usage status of each micro server pre-stored locally based on the resource release information.

In the embodiments of the present disclosure, when there is resource update information of a micro server, the resource update information can be reported to a load information manager by a proxy server of the micro server, then, the resource update information can be broadcast to a proxy server corresponding to each micro server by the load information manager, so that each proxy server can acquire global resource information about each micro server. In this case, a locally pre-stored resource usage state of each micro server can be updated based on resource update information by a proxy server corresponding to each micro server, so that each proxy server can maintain the resource usage state of each micro server timely and accurately. A load balancing operation is executed based on a resource usage state, thereby realizing global load balancing based on global resource information. Thus, the accuracy of implementing load balancing is improved, and the reliability and accuracy of resource management are improved.

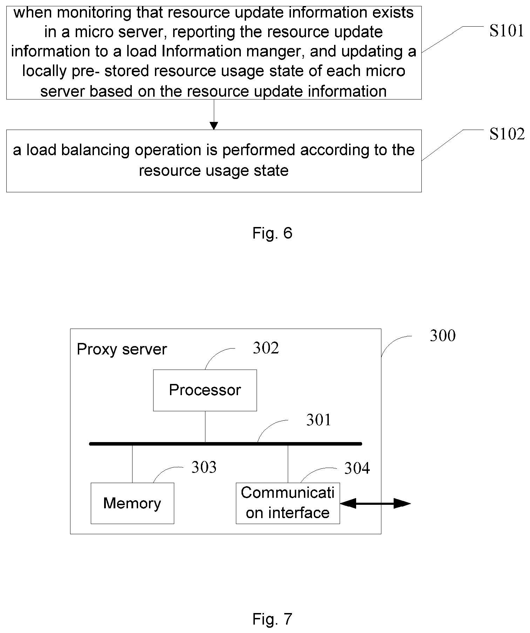

Please refer to Fig. 6, Fig. 6 is a schematic flowchart of a resource management method according to an embodiment of the present disclosure. The resource management method may be applied to a proxy server, and the resource management method may include but is not limited to steps S101 to S102, and may specifically be as follows:
S101, when monitoring that resource update information exists in a micro server, reporting the resource update information to a load information manager, and updating a locally pre stored resource usage state of each micro server based on the resource update information.
S102, a load balancing operation is performed according to the resource usage state.

In one embodiment, when monitoring that the micro server has resource update information, reporting the resource update information to a load information manager, and updating a locally pre stored resource usage state of each micro server based on the resource update information may comprise: acquiring resource occupation information requested by a micro server of a requester; reporting resource occupation information to a load information manager; and updating a locally pre-stored resource usage state of each micro server based on the resource occupation information.

In one embodiment, executing the load balancing operation according to the resource usage state may comprise: according to the resource usage state and a load balancing policy with a priority on the smallest number of connections, setting an instance of a micro server corresponding to a smallest number of connections among a plurality of micro servers as an instance of a micro server of a receiver corresponding to a request; sending the request to a proxy server of the receiver, such that the proxy server of the receiver forwards the request to the instance of the micro server of the receiver.

In one embodiment, executing a load balancing operation according to a resource usage state may comprise: according to the resource usage state and a load balancing policy with a preferential response speed, setting an instance of a micro server corresponding to a fastest response speed among a plurality of micro servers as an instance of a micro server requesting a corresponding receiver; sending the request to a proxy server of the receiver, such that the proxy server of the receiver forwards the request to the instance of the micro server of the receiver.

In one embodiment, executing a load balancing operation according to a resource usage state may comprise: according to the resource usage state and a load balancing policy of weight polling, setting an instance of a micro server corresponding to a smallest weight among a plurality of micro servers as an instance of a micro server requesting a corresponding receiver; the weight is a weight of a resource consumed by processing a request; sending the request to a proxy server of the receiver, such that the proxy server of the receiver forwards the request to the instance of the micro server of the receiver.

In one embodiment, executing a load balancing operation according to a resource usage state may comprise: receiving resource release information broadcast by a load information manager, wherein the resource release information is reported to the load information manager by a proxy server of a receiver after a micro server of the receiver completes the processing of a request initiated by a requester; and updating a locally pre-stored resource usage state of each micro server instance according to the resource release information.

In one embodiment, the resource management method can further comprise: sending a registration request to a load information manager, and establishing a connection relationship with the load information manager according to the registration request; or sending a logout request to the load information manager, and logging out the connection relationship with the load information manager according to the logout request.

In the foregoing embodiments, descriptions of the embodiments are focused on each other. For a part that is not described in detail in a certain embodiment, reference may be made to the foregoing detailed description of the resource management method, and details are not repeatedly described herein.

In the embodiments of the present disclosure, when monitoring that resource update information exists in a micro server, a proxy server may report the resource update information to a load information manager, so that the load information manager broadcasts the resource update information to the proxy servers corresponding to a plurality of micro servers in time, so that each proxy server can acquire global resource information about each micro server, and the plurality of proxy servers corresponding to the respective micro servers updates a locally pre stored resource usage state of each micro server based on the resource update information, so that each proxy server can maintain the resource usage state of each micro server timely and accurately, and updating a locally pre-stored resource usage state of each micro server based on the resource update information. The resource usage status of each micro server may be accurately maintained. The proxy server can execute a load balancing operation according to a resource usage state, thereby realizing global load balancing based on global resource information, improving the accuracy of executing load balancing, and improving the reliability and accuracy of resource management.

Please refer to Fig. 7, Fig. 7 is a schematic block diagram of a proxy server according to an embodiment of the present disclosure.

As shown in Fig. 7, the proxy server 300 may include a processor 302, a memory 303, and a communications interface 304 that are connected by using a system bus 301, where the memory 303 may include a non transitory computer readable storage medium and an internal memory.

A non transitory computer readable storage medium may store a computer program. The computer program includes a program instruction. When the program instruction is executed, the processor is enabled to execute any resource management method.

The processor 302 is configured to provide computing and control capabilities, and support running of the whole proxy server.

The memory 303 provides an environment for running a computer program in a non volatile computer readable storage medium. When the computer program is executed by the processor 302, the processor 302 can execute any resource management method.

The communication interface 304 is arranged to communicate. Persons skilled in the art may understand that the structure shown in Fig. 7 is only a partial block structure related to the solution of the present disclosure, and does not limit the proxy server 300 to which the solution of the present disclosure is applied. The specific proxy server 300 may include more or fewer components than those shown in the figures, or may combine some components, or may have different component arrangements.

It should be understood that, the bus 301 is, for example, an I2C (Inter integrated Circuit) bus, and the memory 303 may be a Flash chip, a Read Only Memory (ROM) disk, an optical disk, a U disk, a mobile hard disk, or the like. The processor 302 may be a Central Processing Unit (CPU), the processor 302 may also be another general processor, a Digital Signal Processor (DSP), or an Application Specific Integrated Circuit (ASIC), a Field Programmable Gate Array (FPGA) or another programmable logic device, a discrete gate or transistor logic device, a discrete hardware component, or the like. The general processor may be a microprocessor, or the processor may also be any conventional processor.

In an embodiment, the processor 302 is configured to run a computer program stored in the memory 303, so as to execute the following steps:
When monitoring that the micro server has resource update information, reporting the resource update information to a load information manager, and updating a locally pre-stored resource usage state of each micro server based on the resource update information; and performing a load balancing operation according to the resource usage state.

In an embodiment, when reporting resource update information to a load information manager, and updating a locally pre-stored resource usage state of each micro server based on the resource update information, a processor 302 further executes: acquiring resource occupation information requested by a micro server of a requester; reporting resource occupation information to a load information manager; and updating a locally pre stored resource usage state of each micro server based on the resource occupation information.

In an embodiment, when a load balancing operation is executed according to a resource usage state, the processor 302 further executes: setting an instance of the micro server, which corresponds to a smallest connection number among the plurality of micro servers, as the instance of the micro server of the receiver corresponding to a request, based on the resource usage state and a load balancing policy which is that smallest connection number takes precedence; sending the request to a proxy server of the receiver, such that the proxy server of the receiver forwards the request to the instance of the micro server of the receiver.

In an embodiment, when executing a load balancing operation according to a resource usage state, the processor 302 further executes: setting an instance of a micro server, which corresponds to a fastest response speed among a plurality of micro servers, as an instance of a micro server of a receiver corresponding to a request, based on the resource usage state and a load balancing policy which is that response speed takes precedence; sending the request to the proxy server of the receiver, so that the proxy server of the receiver forwards the request to the instance of the micro server of the receiver.

In an embodiment, when a load balancing operation is executed according to a resource usage state, the processor 302 further executes: setting an instance of a micro server, which corresponds to the smallest weight among a plurality of micro servers, as an instance of a micro server of a receiver corresponding to the request based on the resource usage state and a load balancing policy of weighted polling; the weight is a weight of a resource consumed by processing a request; sending the request to the proxy server of the receiver, so that the proxy server of the receiver forwards the request to the instance of the micro server of the receiver.

In an embodiment, when executing a load balancing operation according to a resource usage state, the processor 302 further executes the following steps: receiving resource release information broadcast by a load information manager, the resource release information being reported to the load information manager by means of a proxy server of a receiver after a micro server of the receiver completes the processing of a request initiated by a requester; and updating a locally pre stored resource usage state of each micro server instance according to the resource release information.

In one embodiment, the processor 302 further executes: sending a registration request to a load information manager, and establishing a connection relationship with the load information manager according to the registration request; or sending a logout request to the load information manager, and logging out the connection relationship with the load information manager according to the logout request.

In the foregoing embodiments, descriptions of the embodiments are focused on each other. For a part that is not described in detail in a certain embodiment, reference may be made to the foregoing detailed description of the resource management method, and details are not repeatedly described herein.

Embodiments of the present disclosure further provide a computer readable storage medium. The computer readable storage medium stores a computer program. The computer program comprises a program instruction. A processor executes the program instruction, so as to implement any resource management method provided in the embodiments of the present disclosure. For specific implementation of the foregoing operations, reference may be made to the foregoing embodiments, and details are not repeatedly described herein.

The computer readable storage medium may be an internal storage unit of the mobile terminal in the foregoing embodiment, for example, a hard disk or a memory of the mobile terminal. The computer readable storage medium may also be an external storage device of the mobile terminal, for example, a plug in hard disk, a Smart Media Card (SMC), a Secure Digital (SD) card, and a Flash Card that are equipped on the mobile terminal.

Since the computer program stored in the computer readable storage medium can execute any resource management method provided in the embodiments of the present disclosure, beneficial effects which can be achieved by any resource management method provided in the embodiments of the present disclosure can be achieved, and reference can be made to the foregoing embodiments for details, which will not be described herein again.

It should be understood that the terminology used in this disclosure is for the purpose of describing particular embodiments only and is not intended to be limiting of the disclosure. As used in this description and the appended claims, the singular forms "a, " "an, " and "the" are intended to include the plural forms as well, unless the context clearly indicates otherwise.

It is also to be understood that the term "and/or" as used in this description and the appended claims refers to, and includes, any and all possible combinations of one or more of the items listed in association. It should be noted that, in this description, the terms "include", "comprise", or any other variation thereof are intended to cover a non-exclusive inclusion, so that a process, a method, an article, or a system that includes a series of elements not only includes those elements, but also includes other elements that are not explicitly listed, or further includes inherent elements of the process, the method, the article, or the system. An element limited by "including a..." does not exclude that there are other same elements in the process, method, article, or system that includes the element, unless there are more limitations.

The serial numbers of the embodiments of the present disclosure are only for description, and do not represent the preference of the embodiments. The foregoing descriptions are merely specific implementations of the present disclosure, but are not intended to limit the scope of protection of the present disclosure. The scope of protection is limited by the claims.

## Claims

1. A resource management method, wherein the resource management method is applied to a resource management system, the resource management system comprises a plurality of micro servers, a plurality of proxy servers corresponding to respective micro servers, and a load information manager, and the resource management method comprises:
when resource update information of a micro server exists, reporting the resource update information to the load information manager by a proxy server corresponding to the micro server (S10);
broadcasting, by the load information manager, the resource update information to the plurality of proxy servers corresponding to the respective micro servers (S20); and
updating, by each proxy server in the plurality of proxy servers corresponding to the respective micro servers, a locally pre-stored resource usage state of each micro server based on the resource update information, wherein the resource usage state is used to perform a load balancing operation (S30).

2. The resource management method according to claim 1, wherein when the resource update information of the micro server exists, reporting the resource update information to the load information manager by using the proxy server corresponding to the micro server, and broadcasting, by using the load information manager, the resource update information to the plurality of proxy servers corresponding to the respective micro servers; updating, by using each proxy server in the plurality of proxy servers corresponding to the respective micro servers, the locally pre-stored resource usage state of each micro server based on the resource update information comprises:
initiating a request by a micro server of a requester, and acquiring resource occupation information of the request;
reporting the resource occupation information to the load information manager by a proxy server of the requester;
broadcasting, by the load information manager, the resource occupation information to the plurality of proxy servers corresponding to the respective micro servers; and
updating, by each proxy server in the plurality of proxy servers corresponding to the respective micro servers, the locally pre-stored resource usage state of each micro server based on the resource occupation information.

3. **The** resource management method according to claim 2, wherein perform the load balancing operation based on the resource usage state comprises:
determining, by the proxy server of the requester, a micro server of a receiver corresponding to the request based on the locally pre-stored resource usage state of each micro server and a pre-set load balancing policy; and
sending, by the proxy server of the requester, the request to the proxy server of the receiver, and forwarding, by using the proxy server of the receiver, the request to the micro server of the receiver.

4. The resource management method according to claim 3, wherein the load balancing policy is that a smallest connection number takes precedence, and determining, by the proxy server of the requester, the micro server of the receiver corresponding to the request based on the locally pre-stored resource usage state of each micro server and the pre-set load balancing policy comprises:
setting, by the proxy server of the requester, an instance of a micro server, which corresponds to the smallest connection number among the plurality of micro servers, as an instance of the micro server of the receiver corresponding to the request, based on a locally pre-stored resource usage state of an instance of each micro server and the load balancing policy which is that the smallest connection number takes precedence; forwarding, by the proxy server of the receiver, the request to the micro server of the receiver comprises: forwarding, by the proxy server of the receiver, the request to the instance of the micro server of the receiver;
or wherein the load balancing policy is that response speed takes precedence, and determining, by the proxy server of the requester, the micro server of the receiver corresponding to the request based on the locally pre-stored resource usage state of each micro server and the pre-set load balancing policy comprises:
setting, by the proxy server of the requester, an instance of a micro server, which corresponds to the fastest response speed among the plurality of micro servers, as an instance of the micro server of the receiver corresponding to the request, based on a locally pre-stored resource usage state of an instance of each micro server and the load balancing strategy which is that response speed takes precedence; forwarding, by using the proxy server of the receiver, the request to the micro server of the receiver comprises: forwarding, by the proxy server of the receiver, the request to the instance of the micro server of the receiver;
or wherein the load balancing policy is weighted polling, and determining, by the proxy server of the requester, the micro server of the receiver corresponding to the request based on the locally pre-stored resource usage state of each micro server and the pre-set load balancing policy comprises:
setting, by the proxy server of the requester, an instance of a micro server, which corresponds to the smallest weight among the plurality of micro servers, as an instance of the micro server of the receiver corresponding to the request based on a locally pre-stored resource usage state of an instance of each micro server and the load balancing policy of weight polling, wherein the weight is a weight of a resource consumed by processing the request;
forwarding, by the proxy server of the receiver, the request to the micro server of the receiver comprises:
forwarding, by the proxy server of the receiver, the request to the instance of the micro server of the receiver.

5. The resource management method according to claim 2, wherein when the resource update information of the micro server exists, reporting the resource update information to the load information manager by the proxy server corresponding to the micro server, and broadcasting, by the load information manager, the resource update information to the plurality of proxy servers corresponding to the respective micro servers; updating, by each proxy server in the plurality of proxy servers corresponding to the respective micro servers, the locally pre-stored resource usage state of each micro server based on the resource update information comprises:
after a micro server of a receiver completes processing the request initiated by a requester, acquiring, by a proxy server of the receiver, resource release information of the request, and reporting, by the proxy server of the receiver, the resource release information to the load information manager;
broadcasting, by the load information manager, the resource release information to the plurality of proxy servers corresponding to the respective micro servers; and
updating, by each proxy server in the plurality of proxy servers corresponding to the respective micro servers, the locally pre-stored resource usage state of each micro server based on the resource release information.

6. The resource management method according to any one of claims 1 to 5, wherein the resource management method further comprises:
configuring the plurality of proxy servers corresponding to the respective micro servers in the resource management system, and configuring the load information manager;
sending, by the plurality of proxy servers corresponding to the respective micro servers, a registration request to the load information manager;
establishing a connection relationship between the load information manager and the plurality of proxy servers corresponding to the respective micro servers according to the registration request.

7. A resource management system, wherein the resource management system comprises a plurality of micro servers, a plurality of proxy servers corresponding to respective micro servers, and a load information manager, the load information manager is communicatively connectable with each proxy server, and the resource management system configured to execute the resource management method according to any one of claims 1 to 6.

8. A storage medium, configured as computer readable storage, wherein the storage medium is configured to store a computer program, and the computer program is loadable by a processor to execute the resource management method according to any one of claims 1 to 6.

## Patentansprüche

1. Ressourcenverwaltungsverfahren, wobei das Ressourcenverwaltungsverfahren auf ein Ressourcenverwaltungssystem angewendet wird, wobei das Ressourcenverwaltungssystem eine Mehrzahl von Mikroservern, eine Mehrzahl von Proxy-Servern, die den jeweiligen Mikroservern entsprechen, und einen Lastinformationsmanager umfasst, wobei das Ressourcenverwaltungsverfahren umfasst:
wenn eine Ressourcenaktualisierungsinformation eines Mikroservers vorhanden ist, Melden der Ressourcenaktualisierungsinformation an den Lastinformationsmanager durch einen Proxy-Server, der dem Mikroserver entspricht (S10);
Senden der Ressourcenaktualisierungsinformation durch den Lastinformationsmanager an die Mehrzahl von Proxy-Servern, die den jeweiligen Mikroservern entsprechen (S20); und
Aktualisieren durch jeden Proxy-Server in der Mehrzahl von Proxy-Servern, die den jeweiligen Mikroservern entsprechen, eines lokal vorgespeicherten Ressourcennutzungszustandes jedes Mikroservers basierend auf der Ressourcenaktualisierungsinformation, wobei der Ressourcennutzungszustand zum Durchführen eines Lastausgleichsvorgangs (S30) verwendet wird.

2. Ressourcenverwaltungsverfahren nach Anspruch 1, wobei, wenn eine Ressourcenaktualisierungsinformation des Mikroservers vorhanden ist, Melden der Ressourcenaktualisierungsinformation an den Lastinformationsmanager durch Verwenden des dem Mikroserver entsprechenden Proxy-Servers und Senden, durch Verwenden des Lastinformationsmanager, der Ressourcenaktualisierungsinformation an die Mehrzahl von Proxy-Servern, die den jeweiligen Mikroservern entsprechen; Aktualisieren, durch Verwenden jedes Proxy-Servers in der Mehrzahl von Proxy-Servern, die den jeweiligen Mikroservern entsprechen, des lokal vorgespeicherten Ressourcennutzungszustandes jedes Mikroservers basierend auf der Ressourcenaktualisierungsinformation umfasst:
Initiieren einer Anforderung durch einen Mikroserver eines Anforderers und Erfassen der Ressourcenbelegungsinformation der Anforderung;
Melden der Ressourcenbelegungsinformation an den Lastinformationsmanager durch einen Proxy-Server des Anforderers;
Senden der Ressourcennutzungsinformation durch den Lastinformationsmanager an die Mehrzahl von Proxy-Servern, die den jeweiligen Mikroservern entsprechen; und
Aktualisieren, durch jeden Proxy-Server in der Mehrzahl von Proxy-Servern, die den jeweiligen Mikroservern entsprechen, des lokal vorgespeicherten Ressourcennutzungszustandes jedes Mikroservers basierend auf der Ressourcenbelegungsinformation.

3. Ressourcenverwaltungsverfahren nach Anspruch 2, wobei Durchführen des Lastenausgleichsvorgangs basierend auf dem Ressourcennutzungszustand umfasst:
Bestimmen, durch den Proxy-Server des Anforderers, eines Mikroservers eines Empfängers, der der Anforderung entspricht, basierend auf dem lokal vorgespeicherten Ressourcennutzungszustand jedes Mikroservers und einer voreingestellten Lastausgleichsstrategie; und
Senden, durch den Proxy-Server des Anforderers, der Anforderung an den Proxy-Server des Empfängers und Weiterleiten, durch Verwenden des Proxy-Servers des Empfängers, der Anforderung an den Mikroserver des Empfängers.

4. Ressourcenverwaltungsverfahren nach Anspruch 3, wobei die Lastausgleichsstrategie darin besteht, dass eine geringste Verbindungsanzahl Vorrang hat, und Bestimmen, durch den Proxy-Server des Anforderers, des Mikroservers des Empfängers, der der Anforderung entspricht basierend auf dem lokal vorgespeicherten Ressourcennutzungszustand jedes Mikroservers und der voreingestellten Lastausgleichstrategie umfasst:
Einstellen, durch den Proxy-Server des Anforderers, einer Instanz eines Mikroservers, der der geringsten Verbindungsanzahl unter der Mehrzahl von Mikroservern entspricht, als eine Instanz des Mikroservers des Empfängers, der der Anforderung entspricht, basierend auf einem lokal vorgespeicherten Ressourcennutzungszustand einer Instanz jedes Mikroservers und der Lastausgleichsstrategie, die darin besteht, dass die geringste Verbindungsanzahl Vorrang hat; wobei Weiterleiten, durch den Proxy-Server des Empfängers, der Anforderung an den Mikroserver des Empfängers umfasst: Weiterleiten, durch den Proxy-Server des Empfängers, der Anforderung an die Instanz des Mikroservers des Empfängers;
oder wobei die Lastausgleichsstrategie darin besteht, dass die Reaktionsgeschwindigkeit Vorrang hat, und Bestimmen, durch den Proxy-Server des Anforderers, des Mikroservers des Empfängers, der der Anforderung entspricht, basierend auf dem lokal vorgespeicherten Ressourcennutzungszustand jedes Mikroservers und der voreingestellten Lastausgleichstrategie umfasst:
Einstellen, durch den Proxy-Server des Anforderers, einer Instanz eines Mikroservers, der der schnellsten Reaktionsgeschwindigkeit unter der Mehrzahl von Mikroservern entspricht, als eine Instanz des Mikroservers des Empfängers, der der Anforderung entspricht, basierend auf einem lokal vorgespeicherten Ressourcennutzungszustand einer Instanz jedes Mikroservers und der Lastausgleichstrategie, die darin besteht, dass die Reaktionsgeschwindigkeit Vorrang hat; wobei Weiterleiten, durch Verwenden des Proxy-Servers des Empfängers, der Anforderung an den Mikroserver des Empfängers umfasst: Weiterleiten, durch den Proxy-Server des Empfängers, der Anforderung an die Instanz des Mikroservers des Empfängers;
oder wobei die Lastausgleichsstrategie eine gewichtete Abfrage ist, und Bestimmen, durch den Proxy-Server des Anforderers, des Mikroservers des Empfängers, der der Anforderung entspricht, basierend auf dem lokal vorgespeicherten Ressourcennutzungszustand jedes Mikroservers und der voreingestellten Lastausgleichstrategie umfasst:
Einstellen, durch den Proxy-Server des Anforderers, einer Instanz eines Mikroservers, der dem kleinsten Gewicht unter der Mehrzahl von Mikroservern entspricht, als eine Instanz des Mikroservers des Empfängers, der der Anforderung entspricht, basierend auf einem lokal vorgespeicherten Ressourcennutzungszustand einer Instanz jedes Mikroservers und der Lastausgleichsstrategie der gewichteten Abfrage, wobei das Gewicht ein Gewicht einer Ressource ist, die durch Verarbeiten der Anforderung verbraucht wird;
wobei Weiterleiten, durch den Proxy-Server des Empfängers, der Anforderung an den Mikroserver des Empfängers umfasst:
Weiterleiten, durch den Proxy-Server des Empfängers, der Anforderung an die Instanz des Mikroservers des Empfängers.

5. Ressourcenverwaltungsverfahren nach Anspruch 2, wobei, wenn die Ressourcenaktualisierungsinformation des Mikroservers vorhanden ist, Melden der Ressourcenaktualisierungsinformation an den Lastinformationsmanager durch den Proxy-Server, der dem Mikroserver entspricht, und Senden, durch den Lastinformationsmanager, der Ressourcenaktualisierungsinformation an die Mehrzahl von Proxy-Servers, die den jeweiligen Mikroservern entsprechen, der lokal vorgespeicherte Ressourcennutzungszustand jedes Mikroservers basierend auf der Ressourcenaktualisierungsinformation umfasst:
nachdem ein Mikroserver des Empfängers die Verarbeitung der von einem Anforderer initiierten Anforderung abgeschlossen hat, Erfassen, durch einen Proxy-Server des Empfängers, der Ressourcenfreigabeinformation der Anforderung und Melden, durch den Proxy-Server des Empfängers, der Ressourcenfreigabeinformation an den Lastinformationsmanager;
Senden, durch den Lastinformationsmanager, der Ressourcenfreigabeinformation an die Mehrzahl von Proxy-Servern, die den jeweiligen Mikroservern entsprechen; und
Aktualisieren, durch jeden Proxy-Server in die Mehrzahl von Proxy-Servern, die den jeweiligen Mikroservern entsprechen, des lokal vorgespeicherten Ressourcennutzungszustandes jedes Mikroservers basierend auf der Ressourcenfreigabeinformation.

6. Ressourcenverwaltungsverfahren nach einem der Ansprüche 1 bis 5, wobei das Verfahren ferner umfasst:
Konfigurieren der Mehrzahl von Proxy-Servern, die den jeweiligen Mikroservern entsprechen in dem Ressourcenverwaltungssystem, und Konfigurieren des Lastinformationsmanagers;
Senden, durch die Mehrzahl von Proxy-Servern, die den jeweiligen Mikroservern entsprechen, einer Registrierungsanforderung an den Lastinformationsmanager;
Herstellen einer Verbindungsbeziehung zwischen dem Lastinformationsmanager und der Mehrzahl von Proxy-Servern, die den jeweiligen Mikroservern entsprechen, nach der Registrierungsanforderung.

7. Ressourcenverwaltungssystem, wobei das Ressourcenverwaltungssystem eine Mehrzahl von Mikroservern, eine Mehrzahl von Proxy-Servern, die den jeweiligen Mikroservern entsprechen, und einen Lastinformationsmanager umfasst, wobei der Lastinformationsmanager mit jedem Proxy-Server kommunikativ verbindbar ist, und wobei das Ressourcenverwaltungssystem dazu konfiguriert ist, das Ressourcenverwaltungsverfahren nach einem der Ansprüche 1 bis 6 auszuführen.

8. Speichermedium, das als computerlesbarer Speicher konfiguriert ist, wobei das Speichermedium dazu konfiguriert ist, ein Computerprogramm zu speichern, und wobei das Computerprogramm durch einen Prozessor geladen werden kann, um das Ressourcenverwaltungsverfahren nach einem der Ansprüche 1 bis 6 auszuführen.

## Revendications

1. Un procédé de gestion de ressources, ledit procédé de gestion de ressources étant appliqué à un système de gestion de ressources, ledit système de gestion de ressources comprenant une pluralité de micro-serveurs, une pluralité de serveurs mandataires correspondant respectivement aux micro-serveurs, et un gestionnaire d'informations de charge, ledit procédé de gestion de ressources comprenant:
lorsque des informations de mise à jour des ressources d'un micro-serveur existent, signaler lesdites informations de mise à jour des ressources au gestionnaire d'informations de charge par un serveur mandataire correspondant audit micro-serveur (S10);
diffuser, par le gestionnaire d'informations de charge, les informations de mise à jour des ressources à la pluralité de serveurs mandataires correspondant respectivement aux micro-serveurs (S20); et
mettre à jour, par chaque serveur mandataire parmi la pluralité de serveurs mandataires correspondant respectivement aux micro-serveurs, un état d'utilisation des ressources préstocké localement pour chaque micro-serveur sur la base des informations de mise à jour des ressources, ledit état d'utilisation des ressources étant utilisé pour réaliser une opération d'équilibrage de charge (S30).

2. Le procédé de gestion de ressources selon la revendication 1, dans lequel, lorsque des informations de mise à jour des ressources du micro-serveur existent, signaler lesdites informations de mise à jour des ressources au gestionnaire d'informations de charge à l'aide du serveur mandataire correspondant audit micro-serveur, et diffuser, à l'aide du gestionnaire d'informations de charge, lesdites informations de mise à jour des ressources à la pluralité de serveurs mandataires correspondant respectivement aux micro-serveurs; mettre à jour, à l'aide de chaque serveur mandataire parmi la pluralité de serveurs mandataires correspondant respectivement aux micro-serveurs, l'état d'utilisation des ressources préstocké localement pour chaque micro-serveur sur la base des informations de mise à jour des ressources, comprend:
initier une requête par un micro-serveur demandeur et acquérir des informations d'occupation des ressources de la requête;
signaler les informations d'occupation des ressources au gestionnaire d'informations de charge par un serveur mandataire du demandeur;
diffuser, par le gestionnaire d'informations de charge, les informations d'occupation des ressources à la pluralité de serveurs mandataires correspondant respectivement aux micro-serveurs; et
mettre à jour, par chaque serveur mandataire parmi la pluralité de serveurs mandataires correspondant respectivement aux micro-serveurs, l'état d'utilisation des ressources préstocké localement pour chaque micro-serveur sur la base des informations d'occupation des ressources.

3. Le procédé de gestion de ressources selon la revendication 2, dans lequel réaliser l'opération d'équilibrage de charge sur la base de l'état d'utilisation des ressources comprend:
déterminer, par le serveur mandataire du demandeur, un micro-serveur de réception correspondant à la requête sur la base de l'état d'utilisation des ressources préstocké localement pour chaque micro-serveur et d'une politique d'équilibrage de charge prédéfinie; et
envoyer, par le serveur mandataire du demandeur, la requête au serveur mandataire du récepteur, et retransmettre, à l'aide du serveur mandataire du récepteur, ladite requête au micro-serveur du récepteur.

4. Le procédé de gestion de ressources selon la revendication 3, dans lequel la politique d'équilibrage de charge est que le plus petit nombre de connexions a la priorité, et la détermination, par le serveur mandataire du demandeur, du micro-serveur du récepteur correspondant à la requête sur la base de l'état d'utilisation des ressources préstocké localement pour chaque micro-serveur et de la politique d'équilibrage de charge prédéfinie comprend:
configurer, par le serveur mandataire du demandeur, une instance d'un micro-serveur, correspondant au plus petit nombre de connexions parmi la pluralité de micro-serveurs, en tant qu'instance du micro-serveur du récepteur correspondant à la requête, sur la base d'un état d'utilisation des ressources préstocké localement pour une instance de chaque micro-serveur et de la politique d'équilibrage de charge selon laquelle le plus petit nombre de connexions a la priorité; le transfert, par le serveur mandataire du récepteur, de la requête au micro-serveur du récepteur comprend: le transfert, par le serveur mandataire du récepteur, de la requête à l'instance du micro-serveur du récepteur;
ou dans lequel la politique d'équilibrage de charge est que la vitesse de réponse a la priorité, et la détermination, par le serveur mandataire du demandeur, du micro-serveur du récepteur correspondant à la requête sur la base de l'état d'utilisation des ressources préstocké localement pour chaque micro-serveur et de la politique d'équilibrage de charge prédéfinie comprend:
configurer, par le serveur mandataire du demandeur, une instance d'un micro-serveur, correspondant à la vitesse de réponse la plus rapide parmi la pluralité de micro-serveurs, en tant qu'instance du micro-serveur du récepteur correspondant à la requête, sur la base d'un état d'utilisation des ressources préstocké localement pour une instance de chaque micro-serveur et de la stratégie d'équilibrage de charge selon laquelle la vitesse de réponse a la priorité; le transfert, à l'aide du serveur mandataire du récepteur, de la requête au micro-serveur du récepteur comprend: le transfert, par le serveur mandataire du récepteur, de la requête à l'instance du micro-serveur du récepteur;
ou dans lequel la politique d'équilibrage de charge est un polling pondéré, et la détermination, par le serveur mandataire du demandeur, du micro-serveur du récepteur correspondant à la requête sur la base de l'état d'utilisation des ressources préstocké localement pour chaque micro-serveur et de la politique d'équilibrage de charge prédéfinie comprend:
configurer, par le serveur mandataire du demandeur, une instance d'un micro-serveur, correspondant au poids le plus faible parmi la pluralité de micro-serveurs, en tant qu'instance du micro-serveur du récepteur correspondant à la requête, sur la base d'un état d'utilisation des ressources préstocké localement pour une instance de chaque micro-serveur et de la politique d'équilibrage de charge par polling pondéré, le poids étant un poids d'une ressource consommée par le traitement de la requête;
le transfert, par le serveur mandataire du récepteur, de la requête au micro-serveur du récepteur comprend:
le transfert, par le serveur mandataire du récepteur, de la requête à l'instance du micro-serveur du récepteur.

5. Le procédé de gestion de ressources selon la revendication 2, dans lequel, lorsque des informations de mise à jour des ressources du micro-serveur existent, signaler lesdites informations de mise à jour des ressources au gestionnaire d'informations de charge par le serveur mandataire correspondant audit micro-serveur, et diffuser, par le gestionnaire d'informations de charge, lesdites informations de mise à jour des ressources à la pluralité de serveurs mandataires correspondant respectivement aux micro-serveurs; mettre à jour, par chaque serveur mandataire parmi la pluralité de serveurs mandataires correspondant respectivement aux micro-serveurs, l'état d'utilisation des ressources préstocké localement pour chaque micro-serveur sur la base des informations de mise à jour des ressources comprend:
après qu'un micro-serveur du récepteur a terminé le traitement de la requête initiée par un demandeur, acquérir, par un serveur mandataire du récepteur, des informations de libération de ressources de la requête, et signaler, par le serveur mandataire du récepteur, lesdites informations de libération de ressources au gestionnaire d'informations de charge;
diffuser, par le gestionnaire d'informations de charge, les informations de libération de ressources à la pluralité de serveurs mandataires correspondant respectivement aux micro-serveurs; et
mettre à jour, par chaque serveur mandataire parmi la pluralité de serveurs mandataires correspondant respectivement aux micro-serveurs, l'état d'utilisation des ressources préstocké localement pour chaque micro-serveur sur la base des informations de libération de ressources.

6. Le procédé de gestion de ressources selon l'une quelconque des revendications 1 à 5, dans lequel ledit procédé de gestion de ressources comprend en outre:
configurer la pluralité de serveurs mandataires correspondant respectivement aux micro-serveurs dans le système de gestion de ressources, et configurer le gestionnaire d'informations de charge;
envoyer, par la pluralité de serveurs mandataires correspondant respectivement aux micro-serveurs, une requête d'enregistrement au gestionnaire d'informations de charge;
établir une relation de connexion entre le gestionnaire d'informations de charge et la pluralité de serveurs mandataires correspondant respectivement aux micro-serveurs en fonction de la requête d'enregistrement.

7. Un système de gestion de ressources, ledit système de gestion de ressources comprenant une pluralité de micro-serveurs, une pluralité de serveurs mandataires correspondant respectivement aux micro-serveurs, et un gestionnaire d'informations de charge, ledit gestionnaire d'informations de charge étant communicativement connectable à chaque serveur mandataire, et ledit système de gestion de ressources étant configuré pour exécuter le procédé de gestion de ressources selon l'une quelconque des revendications 1 à 6.

8. Un support de stockage, configuré en tant que support de stockage lisible par un ordinateur, ledit support de stockage étant configuré pour stocker un programme informatique, ledit programme informatique étant chargeable par un processeur pour exécuter le procédé de gestion de ressources selon l'une quelconque des revendications 1 à 6.
